# EUROPEAN PATENT SPECIFICATION

(11) **EP 2 070 404 B1**
(45) Date of publication and mention of the grant of the patent: **07.03.2012**
(21) Application number: 07122926.4
(22) Date of filing: 11.12.2007
(51) Int. Cl.: A01F 15/07, A01F 15/08, B30B 9/30

(54) **Gate latch mechanism**
Türriegelmechanismus
Mécanisme de loquet de porte

(43) Date of publication of application: 17.06.2009
(73) Proprietor: Deere & Company, Moline, IL 61265-8098 (US)
(72) Inventor: Viaud, Jean, 70100, Gray (FR); Chapon, Emmanuel, 70100, Velet (FR)
(74) Representative: Magin, Ludwig Bernhard

(56) References cited:
- EP-A- 1 366 654
- DE-C1- 4 012 755
- US-A- 4 119 026

## Description

This invention relates to a gate latch mechanism between a gate carrier having a latch, and a gate having a locking pin and being journalled about a bearing on the gate carrier by means of an actuator.

DE 40 12 755 C1 discloses a round baler where a gate is pivoting about a horizontal axis on the chassis of the round baler between a closed and an open position, whereas this axis is located on the top front area of the gate. On the chassis of the round baler is also provided a latch with a recess, in which a locking pin on the gate may be received and captured until said latch is moved vertically towards an open position. The gate moves into its close position based on its own weight. During this movement the gate is supported by a hydraulic cylinder resting on and thereby depressing the latch. Once the gate has reached the closed position the hydraulic cylinder will be retracted and move the latch upwardly to hold the locking pin. Another example of such a baler is Deutz Fahr round baler RB 4.4.

In another type of a round baler the gate is journalled about an axis substantially in the center of a bale chamber, see as example EP 1308079 A1 or Vermeer round baler 504 HE. In this case the weight of the gate is not sufficient to overcome the tension in the belts, friction in the bearings, obstructions by crop etc. to safely reach the closed position, in which it gets locked. Here a more complicated locking mechanism is necessary to securely move and hold the locking pin in the closed position.

The problem to be solved by means of the invention is seen in the need to provide a gate latch mechanism, which is simple and reliable and does not obstruct the path of the locking pin moving towards the locking position.

This problem is solved in an innovative way by means of the teaching of claim 1, whereas advantageous features further developing the invention are given in the claims related to claim 1.

By means of this teaching the actuator, like a hydraulic, electric or pneumatic motor, may pull the gate down and at the same time raise the latch without obstructing the path of the locking pin. Due to a tilting movement of the actuator about its bearings during the closing movement of the gate an additional linear movement is created, which moves the latch down to free the way for the locking pin. This additional linear movement compensates the contraction of the actuator. Obviously the given equation allows multiple adjustments of the location of the actuator and the latch to the weight of the gate, the speed to move it up and down, the force needed to close it and keep it closed, etc.

Under circumstances with little forces breaking the downward movement of the gate, it might be sufficient to use one actuator on one side of the baler to raise and one to lower the gate on the other side. However, when stronger forces apply having two single acting actuators working in different directions on each side of the baler, would be better, since this would avoid bending and torsion forces. The safest and least space consuming solution however would be the use of one double acting actuator per side.

Using a curved profile on the receiving contour will allow the locking pin to slide over it or even with a little distance to it such, that no undue friction or even crashs will happen between the pin and the latch. The curve may be of any form, which follows the movement of the locking pin. This does not exclude, that in one extreme the profile is flat and straight - it is just helpful if the profile corresponds with the path of the locking pin.

A protrution in the receiving surface of the latch may help to better catch and relase the locking pin at the beginning and end of its way over the receiving contour.

Heretoafter one embodiment of the invention is described in more detail and in relation to the drawing. It is shown in:
- Fig. 1: a round baler in schematic side view with a gate latching mechanism,
- Fig. 2: the gate latching mechanism in a position, in which it receives a locking pin,
- Fig. 3: the gate latching mechanism in a position, in which the locking pin slides on a receiving contour and,
- Fig. 4: the gate latching mechanism in a position, in which the locking pin enters into a locking position.

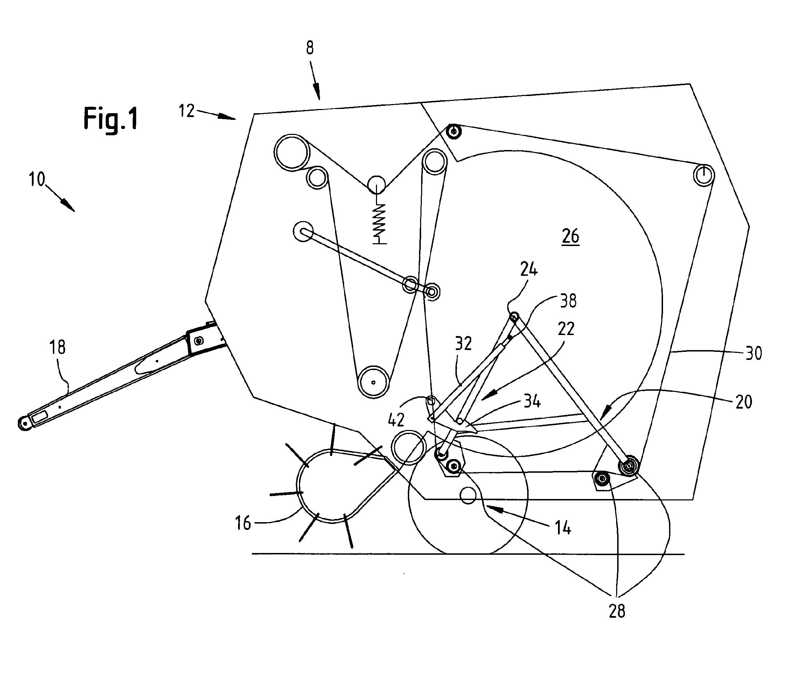

Figur 1 shows a round baler 10 having a frame 12, wheels 14, a pick-up 16, a tongue 18, a gate 20 and a gate latching mechanism 22.

This round baler 10 is completely described in EP 1308079 A1, which description is incorporated by reference hereby.

The frame 12 contains a front gate carrier 8, which is fixed in its position, and which carries the gate 20, which can move vertically between a closed and an open position to form or release a bale, as this is well known. The gate carrier 8 is composed of side walls, struts, rolls etc. forming a substantially stiff unit in the front area of the frame 12. The movement of the gate 20 happens about a bearing 24, which is located substantially in the center area of a bale chamber 26, although this exact location may vary.

The wheels 14 serve to support the frame 12 on the ground, whereas the tongue 18 is used to connect the round baler 10 to a tractor or the like, not shown.

The pick-up 16 collects crop lying on the ground and delivers it rearwardly into the bale chamber 26, where a bale is formed therefrom.

The gate 20 is of the so-called light gate type, which means it contains only some rolls 28 and some baling means 30 trained over the rolls 28 to form the bale chamber 26. However, the gate 20 does not include sidewalls, since they are part of the frame 12. Again, this light gate type is advantegeous when using this invention, but not necessary. In figure 1 the gate 20 assumes its lower and closed position, i.e. in which the bale chamber 26 is closed.

The gate latching mechanism 22 contains an actuator 32, a latch 34 and a locking pin 36 and is provided at least on one side of the round baler 10 outside the bale chamber 26.

The actuator 32 is formed as a double acting hydraulic motor with a piston moving longitudinally in either direction. In an upper end area the actuator 32 is journalled on the gate 20 on a bearing 38 and in a lower end area on a bearing 40 on the latch 34.

The latch 34 is of an elongated form, which has a bearing 42 at one end, namely facing the gate carrier 8, a receiving contour 44 at the opposited end and on the upper side, a hook portion 46 between the bearing 42 and the receiving contour 44, being open upwardly, and the bearing 40 between the receiving contour 44 and the bearing 42. In this case the bearing 42 is even located between the hook portion 46 and the bearing 42. The bearing 42 is fixed on the gate carrier 8 and is formed by a pin, shaft or the like and a hole, which each may be on the gate carrier 8 or on the latch. The receiving contour 44 extends over about 2/5 of the latch 34 is slightly bent upwardly to form a convex curve. The hook portion 46 is formed by a step 48 at the end of the receiving contour 44 facing the bearing 42, whereas said step 48 is sized and shaped such, that it can securely hold the locking pin 36 in its locked position. In the area of the bearing 40 the latch 34 is slightly higher than in its remainder to provide sufficient space and strength to receive the bearing 40, which again is formed as a pin and a hole. Both bearings 40, 42 are oriented in the same direction. The latch 34 may be formed as a single piece or as an assembly of two parallel pieces of sheet metal connected to each other. The area, where the hook portion is located is the smallest and gives some flexibility to the latch 34.

The locking pin 36 is formed by a rigid pin or rotating roll or the like on such pin, provided on the gate 20 at a position, which moves the locking pin 36 along the receiving contour 44 and into the hook portion 46 when the gate 20 closes the bale chamber 26.

Starting from this description various momentum arms are generated, namely :
a) a momentum arm L2 extending from the bearing 24 of the gate 20 perpendicular to the longitudinal axis of the actuator 32;
b) a momentum arm L3 extending from the bearing 24 of the gate 20 to and perpendicular onto a line perpendicular on the receiving contour 44, where it is contacted by the locking pin 36;
c) a momentum arm L1 extending from the bearing 42 of the latch 34 perpendicular to the longitudinal axis of the actuator 32;
d) a momentum arm L4 extending from the bearing 42 of the latch 34 to and perpendicular onto the line perpendicular on the receiving contour 44, where it is contacted by the locking pin 36;

In order to achieve a movement of the locking pin 36 over the receiving contour 44 into the hook portion 46, the relationship of L2/L3 divided by L1/L4 should be bigger than 1,5.

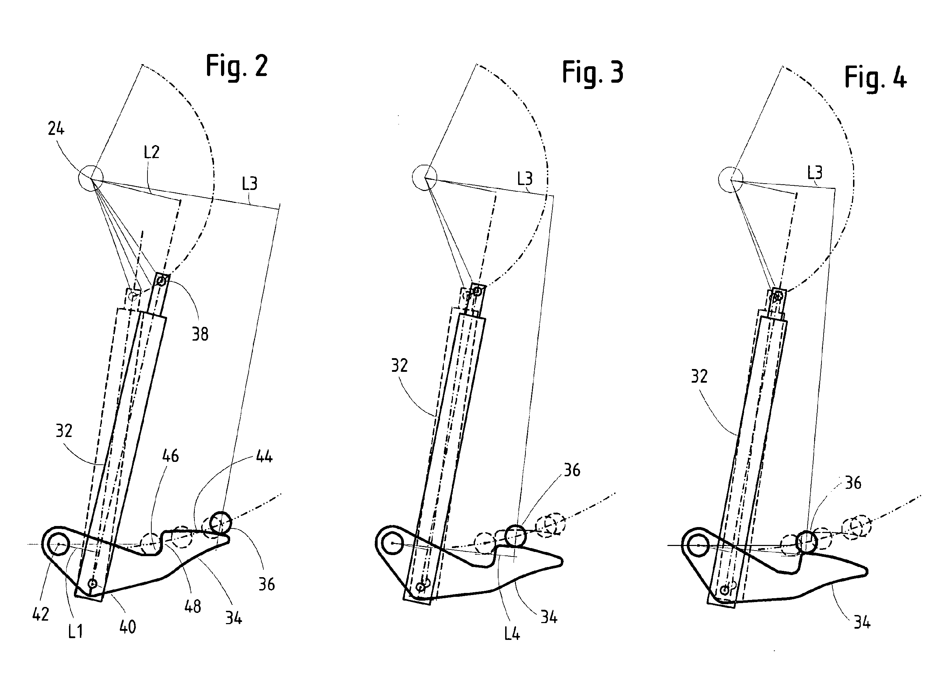

It can be seen in figures 2 through 4, that during the closing movement of the gate 20:
- actuator 32 retracts actively and thereby pulls the latch 34 up and the gate 20 down;
- actuator 32 tilts about the bearing 40 towards the gate carrier 8 and the gate pin 36 pushes down the latch 34 thereby, whereas the contact pressure of the pin 36 is kept minimal by the simultaneous downward movement of the actuator 32 due to its connection with the gate 20;
- latch 34 moves down and the locking pin 36 slides against and on the latch 34 until it falls into the notch;

In other words a triangle the corners of which are defined by bearings 24, 38 and 40 gets flatter and longer during the closing movement of the gate 20, thereby pushing the latch 34 down an amount, which corresponds to the radial path of the moving locking pin 36 with respect to the stationary latch 34.

Finally figure 4 shows in dashed lines the latch 34 in its raised position, in which the locking pin 36 is captured.

## Claims

1. Gate latch mechanism (22) between a gate carrier (8) having a latch (34), and a gate (20) having a locking pin (36) and being journalled about a bearing (24) on the gate carrier (8) by means of an actuator (32), whereas :
a) the latch (34) is journalled at one side on the gate carrier (8) about a bearing (42) and is provided at the other side with a receiving contour (44) for the locking pin (36);
b) the actuator (32) is journalled at one end on the gate (20) and at the other end on the latch (34) between its bearing (42) and the receiving contour (44);
c) a momentum arm L2 extending from the bearing (24) of the gate (20) perpendicular to the longitudinal axis of the actuator (32);
d) a momentum arm L3 extending from the bearing (24) of the gate (20) to and perpendicular onto a line perpendicular on the receiving contour (44), where it is contacted by the locking pin (36);
e) a momentum arm L1 extending from the bearing (42) of the latch (34) perpendicular to the longitudinal axis of the actuator (32);
f) a momentum arm L4 extending from the bearing (42) of the latch (34) to and perpendicular onto the line perpendicular on the receiving contour (44), where it is contacted by the locking pin (36);
**characterized by** dimensions meeting the equation L2/L3 divided by L1/L4 > 1,5.

2. Gate latch mechanism according to claim 1, **characterized in that** either two single acting actuators (32) which can be activated in opposite directions, or one double acting actuator (32) are used to pull the gate (20) into its locked position.

3. Gate latch mechanism according to one or more of the preceding claims, **characterized in that** the receiving contour (44) has a curved profile.

4. Gate latch mechanism according to one or more of the preceding claims, **characterized in that** the receiving contour (44) protrudes towards the bearing (24) of the gate (20).

## Patentansprüche

1. Klappenverriegelungsmechanismus (22) zwischen einem Klappenträger (8), der ein Verriegelungsglied (34) hat, und einer Klappe (20), die einen Sperrstift (36) hat und mittels eines Stellglieds (32) um ein Lager (24) am Klappenträger (8) gelagert ist, wobei
a) das Verriegelungsglied (34) an einer Seite des Klappenträgers (8) um ein Lager (42) gelagert ist und an der anderen Seite mit einer Aufnahmekontur (44) für den Sperrstift (36) versehen ist,
b) das Stellglied (32) an einem Ende an der Klappe (20) und am anderen Ende am Verriegelungsglied (34) zwischen seinem Lager (42) und der Aufnahmekontur (44) gelagert ist,
c) sich ein Momentarm L2 vom Lager (24) der Klappe (20) senkrecht zur Längsachse des Stellglieds (32) erstreckt,
d) sich ein Momentarm L3 vom Lager (24) der Klappe (20) zu einer und senkrecht auf eine Linie erstreckt, die senkrecht zur Aufnahmekontur (44) verläuft, wo sie vom Sperrstift (36) kontaktiert wird,
e) sich ein Momentarm L1 vom Lager (42) des Verriegelungsglieds (34) senkrecht zur Längsachse des Stellglieds (32) erstreckt,
f) sich ein Momentarm L4 vom Lager (42) des Verriegelungsglieds (34) zu einer und senkrecht auf eine Linie erstreckt, die senkrecht zur Aufnahmekontur (44) verläuft, wo sie vom Sperrstift (36) kontaktiert wird,
**gekennzeichnet durch** Abmessungen, die der Gleichung L2/L3 dividiert **durch** L1/L4 > 1,5 entsprechen.

2. Klappenverriegelungsmechanismus nach Anspruch 1, **dadurch gekennzeichnet, dass** entweder zwei einzeln wirkende Stellglieder (32), die in entgegengesetzten Richtungen aktiviert werden können, oder ein doppelt wirkendes Stellglied (32) verwendet werden, um die Klappe (20) in ihre Verriegelte Position zu ziehen.

3. Klappenverriegelungsmechanismus nach einem oder mehreren der vorhergehenden Ansprüche, **dadurch gekennzeichnet, dass** die Aufnahmekontur (44) ein gebogenes Profil hat.

4. Klappenverriegelungsmechanismus nach einem oder mehreren der vorhergehenden Ansprüche, **dadurch gekennzeichnet, dass** die Aufnahmekontur (44) zum Lager (24) der Klappe (20) vorragt.

## Revendications

1. Mécanisme de loquet de porte (22) entre un support de porte (8) doté d'un loquet (34) et une porte (20) dotée d'une tige de blocage (36) et tourillonnée autour d'un palier (24) sur le support de porte (8) au moyen d'un actionneur (32), dans lequel :
a) le loquet (34) est tourillonné d'un côté sur le support de porte (8) autour d'un palier (42) et est pourvu de l'autre côté d'un contour de réception (44) pour la tige de blocage (36) ;
b) l'actionneur (32) est tourillonné à une extrémité sur la porte (20) et à l'autre extrémité sur le loquet (34) entre son palier (42) et le contour de réception (44) ;
c) un bras de moment L2 s'étend à partir du palier (24) de la porte (20) de manière perpendiculaire à l'axe longitudinal de l'actionneur (32) ;
d) un bras de moment L3 s'étend à partir du palier (24) de la porte (20) jusqu'à, et perpendiculairement à, une ligne perpendiculaire au contour de réception (44) à l'endroit où ce dernier est mis en contact avec la tige de blocage (36) ;
e) un bras de moment L1 s'étend à partir du palier (42) du loquet (34) de manière perpendiculaire à l'axe longitudinal de l'actionneur (32) ;
f) un bras de moment L4 s'étend à partir du palier (42) du loquet (34) jusqu'à, et perpendiculairement à, la ligne perpendiculaire au contour de réception (44) à l'endroit où ce dernier est mis en contact avec la tige de blocage (36) ;
**caractérisé en ce que** les dimensions satisfont à l'équation L2/L3 divisé par L1/L4 > 1,5.

2. Mécanisme de loquet de porte selon la revendication 1, **caractérisé en ce que** soit deux actionneurs à simple effet (32) qui peuvent être actionnés dans des sens opposés, soit un actionneur à double effet (32) sont utilisés pour tirer la porte (20) dans sa position bloquée.

3. Mécanisme de loquet de porte selon l'une quelconque ou plusieurs des revendications précédentes, **caractérisé en ce que** le contour de réception (44) présente un profil incurvé.

4. Mécanisme de loquet de porte selon l'une quelconque ou plusieurs des revendications précédentes, **caractérisé en ce que** le contour de réception (44) fait saillie en direction du palier (24) de la porte (20).
